# EUROPEAN PATENT SPECIFICATION

(11) **EP 2 669 253 B1**
(45) Date of publication and mention of the grant of the patent: **09.12.2020**
(21) Application number: 13169676.7
(22) Date of filing: 29.05.2013
(51) Int. Cl.: C01G 23/00, C01G 23/08, C01G 33/00, H02M 1/08

(54) **Titanium oxide for electrode and method for manufacturing the same**
Titanoxid für Elektrode und Verfahren zur Herstellung davon
Oxyde de titane pour électrode et son procédé de fabrication

(30) Priority: 31.05.2012 JP 2012124103
(43) Date of publication of application: 04.12.2013
(73) Proprietor: TITAN KOGYO KABUSHIKI KAISHA, Ube-shi Yamaguchi 755-8567 (JP); KABUSHIKI KAISHA TOSHIBA, Minato-ku Tokyo 105-8001 (JP)
(72) Inventor: NAKAHARA, Kiyoshi, UBE-SHI, YAMAGUCHI, 755-8567 (JP); SEKI, Toshimasa, UBE-SHI, YAMAGUCHI, 755-8567 (JP); INAGAKI, Hiroki, TOKYO, 105-8001 (JP); IWASAKI, Takuya, TOKYO, 105-8001 (JP); TAKAMI, Norio, TOKYO, 105-8001 (JP)
(74) Representative: Cabinet Beau de Loménie

(56) References cited:
- EP-A2- 2 361 888
- JP-A- 2008 117 625
- US-A1- 2012 009 449
- US-A1- 2012 077 074

## Description

The present invention relates to a titanium oxide of bronze structure that can be used as an active material for non-aqueous electrolyte secondary batteries, a titanium composite oxide of bronze structure further containing element(s) other than Ti and O, and a method for manufacturing the same.

Lithium secondary batteries have been developed as power sources for cellular phones and notebook computers because of their high energy density, and as mobile terminal devices have been reduced in size and weight along with recent advances in IT technology, batteries serving as power sources for such devices have also been required to have a smaller size and a higher capacity. In addition, owing to their high energy density, lithium secondary batteries have attracted attention as power sources for electric vehicles and hybrid vehicles and as power sources for power storage.

Conventionally, as negative electrodes for lithium batteries, carbon-based negative electrodes have been commonly used, and lithium secondary batteries using such electrodes are characterized in that the voltage thereof during discharge is high and the energy density thereof is high. However, carbon-based negative electrodes have a low negative electrode electric potential, and therefore have a risk of internal short circuit caused by a lithium metal deposited upon rapid charge and also a risk of ignition caused by the internal short circuit. Then, it has been studied to produce a lithium battery having a high safety and a long life by using a negative electrode that has a higher electric potential while having a lower energy density than a carbon-based negative electrode to thereby reduce heat generation at the time of internal short circuit and also suppress decomposition of an electrolytic solution. In particular, since Li₄Ti₅O₁₂ has an electric potential of 1.5 V relative to lithium, and results in no change in volume during charge and discharge and has extremely good cycle characteristics, coin batteries using Li₄Ti₅O₁₂ are in practical use.

However, Li₄Ti₅O₁₂ has a theoretical capacity of 175 mAh/g that is as low as about a half of the electric capacity of carbon commonly used as a negative electrode material, and therefore, there is a disadvantage that lithium secondary batteries using Li₄Ti₅O₁₂ also have a low energy density. Then, from the viewpoints of safety and long life, there is a demand for a negative electrode material having an electric potential of 1.0 to 1.5 V on the basis of lithium and a high electric capacity.

Under such circumstances, titanium oxides having a bronze structure, made of K₂Ti₄O₉ or Na₂Ti₃O₇ as a starting material, have attracted attention as electrode materials.

In A. R. Armstrong et al., ADVANCED MATERIALS, 2005, 17, No. 7, it has been found that a titanium oxide compound of bronze structure is formed into nanoparticles to thereby provide a high charge/discharge capacity of 200 mAh/g or more. However, such a compound has a low bulk density and a large specific surface area to thereby tend to cause a decrease in the packing properties of an electrode and deterioration in the adhesiveness between a coating film and a current collector, and therefore is not necessarily excellent as an active material. On the other hand, a micron-sized titanium oxide of bronze structure disclosed in Japanese Patent Laid-Open No. 2008-34368 and Japanese Patent Laid-Open No. 2008-117625, obtained through K₂Ti₄O₉ or Na₂Ti₃O₇ by a solid phase method, has good cycle characteristics because its specific surface area can be made smaller and its particle framework is robust, but it has a low charge/discharge capacity.

US 2012/0077074 and US 2012/009449 disclose titanium oxide having a monoclinic crystal structure.

Japanese Patent Laid-Open No. 2011-173761 describes that a titanium oxide of bronze structure further containing Nb or P as an element other than Ti and O has an increased electric capacity. Such a titanium composite oxide of bronze structure, represented by the chemical formula Ti_{(1-X)}MₓO_{y}, can be obtained by preparing a compound containing Nb or P, or both in the stage of mixing raw materials, followed by firing, proton exchange and structural conversion. In the formula, an element M is Nb or P, or both. In the case where x satisfies 0 < x < 0.17 and y satisfies 1.8 ≤ y ≤ 2.1, the titanium composite oxide has a high charge/discharge capacity and particles thereof are likely to be isotropically grown to thereby allow its bulk density and tap density to be higher, and therefore the titanium composite oxide is useful for making the packing density of a coating film higher.

However, titanium oxides of bronze structure are generally obtained by subjecting a potassium titanate of layered structure, K₂Ti₄O₉, to proton exchange to give H₂Ti₄O₉, and converting it to a bronze structure by heat treatment, and therefore there is a problem that counterions of acid for use in the proton exchange significantly adsorb to the interior or surface of particles. Furthermore, the amount of adsorption of the counterions is increased by making the particles finer for the purpose of achieving a higher capacity, to thereby increase the specific surface area, or by carrying out the proton exchange with a stronger acid. The titanium oxide in which the counterions of acid are contained in a large amount allows the counterions to be dissolved into a dispersion medium during production of a coating material. The dissolved counterions are concentrated in the course of drying the coating material to attack a binder resin, thereby deteriorating the binding ability of the resin to a current collector. In addition, a Cu foil or an Al foil for use as the current collector is sensitive to acid, which is considered to be one factor causing electrode deterioration.

As a way of reducing the amount of adsorption of the counterions of acid in a titanium oxide of bronze structure, a neutralization treatment with an alkali metal hydroxide or the like would be generally carried out after proton exchange. However, if a precursor is subjected to the neutralization treatment before structural conversion, alkali metal ions enter interlayers of a layered compound serving as the precursor of a titanium oxide of bronze structure and adsorb to the interlayers, and thus are removed in the subsequent washing step with difficulty. In addition, if the precursor is heat-treated in the state of significantly containing the alkali metal ions, a titanium oxide of anatase phase is easily produced, thereby causing a reduction in charge/discharge capacity.

An object of the present invention is to provide a titanium oxide and titanium composite oxide of bronze structure, having a pigment pH controlled, characterized in that the binding ability between a coating film and a current collector is good and electric capacity is high, and a method for manufacturing the same.

The present inventors have made intensive studies to achieve the object, and, as a result, have found that a titanium oxide of bronze structure having a pigment pH of more than 4 as measured according to the pigment test method defined in JIS K5101-17-1: 2004 and such a titanium oxide further containing at least one metal element and/or non-metal element other than Ti and O in the form of a composite are excellent in the binding ability between a binder resin and a current collector, high in capacity and good in cycle characteristics when used as a negative electrode material for lithium ion secondary batteries, thereby completing the present invention.

That is, the present invention can provide a titanium oxide having a pigment pH of more than 4 as measured according to the pigment test method defined in JIS K5101-17-1: 2004 and having a bronze structure that is monoclinic and that has a space group C2/m in an X-ray diffraction pattern, wherein the titanium oxide is prepared by a method comprising the steps of preparing a slurry containing the titanium oxide of bronze structure, and subjecting the slurry to a neutralization treatment using an aqueous alkaline solution so that the pH of the slurry is more than 4. This titanium oxide may further contain at least one metal element and/or non-metal element other than Ti and O, and in this case, the metal element and/or non-metal element forms a composite with Ti and O to be formed into a titanium composite oxide.

In the case where the titanium oxide of bronze structure further contains at least one metal element and/or non-metal element other than Ti and O, it is preferable that the metal element be Nb and the non-metal element be P. The Nb and P elements have the nature of substituting a Ti element in the titanium oxide, and the substitution of a Ti element with each of the Nb and P elements leads to an increase in electric capacity.

The present invention also provides a method for manufacturing a titanium oxide having a controlled pigment pH of 4 or more, the method including forming a slurry from a titanium oxide having a bronze structure that is monoclinic and that has a space group C2/m in an X-ray diffraction pattern, and subjecting the slurry to a neutralization treatment with an aqueous alkaline solution so that the pH is 4 or more.

The titanium oxide of bronze structure having a pigment pH controlled of the present invention can be used as a negative electrode for lithium secondary batteries, can be used to produce a good electrode coating film, and can also be used to produce a lithium ion secondary battery having a high energy density and good cycle characteristics. Specifically, if the titanium oxide of bronze structure of the present invention is used as a working electrode active material and metal lithium is used for a counter electrode to produce a secondary battery, the discharge capacity in the third cycle is obtained as high as 200 mAh/g or more.
FIG. 1 is an X-ray diffraction diagram of Example 1 of the present invention;
FIG. 2 is a schematic view of a coin battery subjected to battery evaluation in Example 1 of the present invention; and

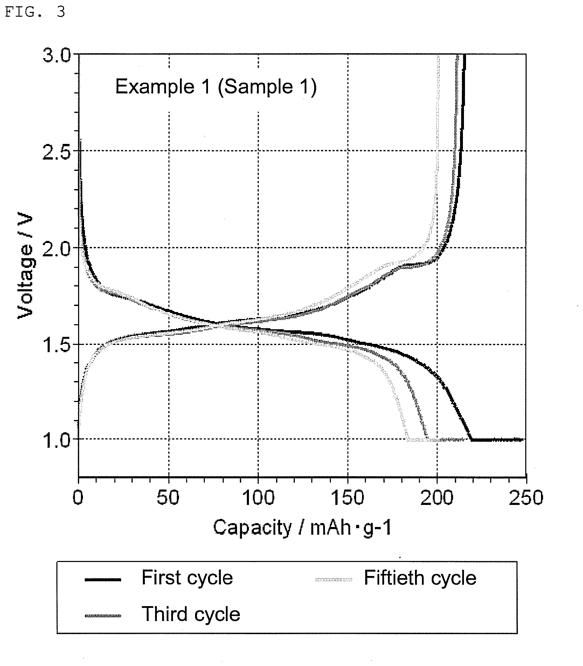

FIG. 3 is a charge/discharge curve of Example 1 of the present invention.

Hereinafter, the titanium oxide having a pigment pH of more than 4 as measured according to the pigment test method defined in JIS K5101-17-1: 2004, and having a bronze structure that is monoclinic (monophasic) and that has a space group C2/m in an X-ray diffraction pattern, and the titanium composite oxide further containing element(s) other than Ti and O, of the present invention, will be described in detail.

### (Pigment pH)

The pigment pH of the titanium oxide of the present invention is measured by the pigment test method in "JIS K5101-17-1 : 2004", and the pH is more than 4. The pigment pH is measured by the following procedure. Five grams of a sample is loaded to 50 g of distilled water in a glass container with a stopper, heated for about 5 minutes to be boiled with the glass container not being stoppered, and then boiled for additional 5 minutes. After the boiling, the glass container is stoppered and the content thereof is left to stand to cool to room temperature, thereafter, the stopper is removed, water is added thereto by an amount corresponding to the reduced amount, and the glass container is again stoppered and shaken for 1 minute, and then left to stand for 5 minutes. The stopper is removed and the pH is measured by a pH measuring instrument.

### (Crystal Structure)

The titanium oxide of the present invention essentially includes Ti and O. The crystal structure thereof can be analyzed by an X-ray diffraction apparatus using Cu as a target, and the X-ray diffraction pattern thereof is identified using the accompanying software from the PDF (Powder Diffraction File) of the ICDD (International Centre For Diffraction Data), as compared with a known X-ray diffraction pattern.

Preferably, the titanium oxide and titanium composite oxide of the present invention correspond to a titanium oxide of bronze structure in an X-ray diffraction pattern, are monoclinic, and have a space group C2/m. Herein, the X-ray diffraction pattern of the titanium oxide of bronze structure is presented by PDF card Nos. 35-0088, 46-1237 and 46-1238.

### (Formation of Composite with Element(s) Other Than Ti and O)

In the present invention, a titanium composite oxide containing an element M and having a bronze structure can be obtained by adding an element M other than Ti and O in an appropriate mixing ratio in the stage of mixing raw materials, followed by firing, proton exchange and structural conversion. The chemical formula of this titanium composite oxide can be represented by Ti_{(1-X)}MₓO_{y}. Preferably, the element M is Nb or P, or both.

### (Carbon Covering)

It is also effective to cover the primary particle surface of each of the titanium oxide and titanium composite oxide of bronze structure of the present invention with carbon to provide conductivity. Such a carbon covering layer is obtained by heat-treating an organic substance and the titanium oxide or titanium composite oxide under a non-oxidizing atmosphere. The carbon covering enhances electron conductivity and moderates the expansion and contraction of particles along with charge/discharge, and therefore can alleviate damage to a coating film and is effective for load characteristics and cycle stability.

### (Coating Film)

In the case where the titanium oxide or titanium composite oxide of the present invention is used as a negative electrode for lithium batteries, a coating film is required to be formed on the surface of the collector. The coating film can be produced by mixing the titanium oxide or titanium composite oxide of bronze structure as an active material in the ratio of active material : binder : conductive material = 10 : 1 : 1 and dispersing the mixture thoroughly in a dispersion medium, then applying the resultant to an Al foil or a copper foil using a doctor blade and drying it at 100°C, and roll pressing it. The binder, the conductive material and the solvent that can be used are each common one for use in lithium ion secondary batteries, and the proportion of an electrode material mixture to be blended can also be arbitrarily set regardless of the above ratio. The produced coating film can be evaluated by a cross cut test, a peel strength test, a flex resistance test, a scratch hardness (pencil method), a lattice pattern cutting test, and a Taber's abrasion resistance test. The strength of the titanium oxide and titanium composite oxide of bronze structure having a pigment pH adjusted within an appropriate range are measured by various testing methods, and the coating film strength thereof can be confirmed to be higher than that of one having a pH not adjusted.

### (Battery Characteristics)

In the case where a coin-type secondary battery, in which the titanium oxide or titanium composite oxide of bronze structure of the present invention is used as a working electrode active material and Li metal is used as a counter electrode, is produced and subjected to a charge/discharge test at 67 mA per g of active material, the discharge capacity in the third cycle (Li insertion capacity) is 200 mAh/g or more and a capacity retention rate, represented by the ratio of the discharge capacity in the fiftieth cycle to the discharge capacity in the third cycle, can be obtained as high as 90% or more. Furthermore, a titanium composite oxide of bronze structure with additional element(s) such as Nb and/or P added as element(s) other than Ti and O has a comparable crystallite diameter and a comparable specific surface area, and has a capacity higher than a titanium oxide containing no additional element(s). It is assumed that the reason why a composite of the additional element(s) such as Nb and/or P and the titanium oxide is formed to thereby enhance capacity is because a part of a TiO₆ framework of tunnel structure or layered structure is substituted with Nb, P or the like to cause slight deformation in the framework and expand the diffusion pathway of Li ions, thereby making the insertion and desorption of Li ions easier. Indeed, in a titanium oxide of bronze structure obtained by adding Nb and/or P, a lattice constant value corresponding to an interlayer distance is maintained higher than that in one without such adding.

### (Manufacturing Method)

A method for manufacturing the titanium oxide of the present invention will be described below in detail.

As a titanium raw material, an anatase- or rutile-type titanium oxide, hydrous titanium oxide (metatitanic acid), or titanium hydroxide can be used, and an anatase-type titanium oxide or hydrous titanium oxide high in reactivity with auxiliary raw materials is preferably used. As a potassium raw material, potassium carbonate or potassium hydroxide can be used, and potassium carbonate is preferable in terms of working safety. In the case where Nb and/or P are/is added as element(s) other than Ti and O, niobium hydroxide, niobium pentoxide, or potassium niobate can be used as a Nb raw material. As a P raw material, phosphoric acid, diphosphorus pentoxide, potassium phosphate, potassium hydrogen phosphate, potassium metaphosphate, potassium pyrophosphate, potassium dihydrogen pyrophosphate, or ammonium phosphate can be used.

First, the above raw materials are mixed to produce a raw material mixture. For a mixing method, a common grinding and mixing machine such as a Henschel mixer, a vibrating mill, a planetary ball mill or a mortar and pestle device can be used. In the case where the raw materials are mixed with and dissolved in water to form a slurry and the raw material mixture is prepared by a spray dry or spray pyrolysis method with a spray dryer or the like, a more uniform mixing can be realized and a secondary particle size can be adjusted by appropriately combining conditions, and therefore such a case is more preferable.

Then, the raw material mixture is fired in the range of 700 to 1100°C in the atmosphere. The firing time can be appropriately adjusted by the firing temperature and the amount loaded to a furnace, and is preferably 2 to 6 hours. The mixture may be naturally cooled in a furnace or may be ejected from a furnace and left to stand to cool, and the cooling mode thereof is not particularly limited. The constituent phase of the resulting fired product can be confirmed by X-ray diffraction, and the main component thereof is preferably K₂Ti₄O₉ of layered structure that is monoclinic and that has a space group C2/m. In this regard, the diffraction line of by-product(s) is included depending on the adding amount of the additional element(s) such as a Nb and/or P element(s). It is to be noted that in the case where K₂Ti₆O₁₃, K₂Ti₂O₅ or both are present in the fired product, the fired product is ground by a vibrating mill, a hammer mill, mortar and pestle device, or the like and again fired in the atmosphere, thereby making it possible to reduce the amount of by-products such as K₂Ti₆O₁₃ and K₂Ti₂O₅.

The fired product is, if necessary, ground by a common grinding machine such as a vibrating mill, a hammer mill, or a jet mill, and the ground product is immersed in an acid selected from 0.1 to 5N diluted sulfuric acid, hydrochloric acid, nitric acid and a combination thereof to be subjected to proton exchange. This proton exchange treatment is performed for the range of 1 hour to 1 week, and thereafter unnecessary acid and salts are removed by decantation, Nutsche, a centrifuge, filter press, and the like. The proton exchange can be carried out twice or more to thereby remove K ions effectively. After the proton exchange, the resultant is subjected to solid-liquid separation by filter press, a centrifuge, and the like, and dried using a drying machine or an oven at 100°C or higher and 200°C or lower to obtain a precursor of a titanium oxide or titanium composite oxide of bronze structure.

This precursor is subjected to structural conversion by a heat treatment in the range of 300 to 700°C, more preferably in the range of 350 to 500°C in the atmosphere or under a nitrogen atmosphere, thereby obtaining a titanium oxide or titanium composite oxide. Herein, the heat treatment time can be appropriately adjusted by the firing temperature and the amount loaded to a furnace, and is preferably 2 to 6 hours. The titanium oxide or titanium composite oxide may be naturally cooled in a furnace or may be ejected from a furnace and left to stand to cool, and the cooling mode thereof is not particularly limited.

The resulting titanium oxide or titanium composite oxide of bronze structure is immersed in pure water to form a slurry, the pH of the slurry is adjusted using an aqueous alkaline solution including one or two or more of lithium hydroxide, sodium hydroxide and potassium hydroxide with stirring by a stirring machine so as to be more than 4 , and such stirring is continued for 30 minutes to 24 hours with the pH being appropriately adjusted. Thereafter, the slurry is diluted in pure water, unnecessary alkali and salts are removed therefrom by decantation, and the product is washed with pure water; or the slurry is filtered by Nutsche, a centrifuge or filter press to be subjected to solid-liquid separation, and then unnecesary alkali and salts are removed therefrom and the product is washed while flowing pure water. In the case of washing by decantation, the product is further subjected to solid-liquid separation by Nutsche, a centrifuge or filter press. The washed hydrous product is dried in an oven at 100 to 250°C, or dried in an oven and then heat-treated in a common firing furnace such as a kiln or a box-type electric furnace at a temperature of 300 to 500°C, thereby obtaining the titanium oxide or titanium composite oxide.

Carbon covering can be carried out by incorporating an organic compound serving as a carbon source after the adjustment of the pH by the aqueous alkaline solution is completed and the alkali and salts are washed with pure water, and drying it and subjecting to a pyrolysis treatment in nitrogen. As the organic compound, any organic substance constituted by C alone or by C, H and O can be used, and a water-soluble sugar such as glucose or maltose or a water-soluble alcohol such as PVA is preferable. For drying the slurry, any of various ovens and spray drying machines can be used. The pyrolysis treatment is carried out by heating to 500 to 800°C under an atmosphere filled with N₂ gas or Ar gas in place of air. The pyrolysis treatment decomposes and carbonizes the organic compound, thereby making it possible to uniformly cover the titanium oxide or titanium composite oxide with carbon.

Hereinafter, the present invention will be described with reference to Examples in more detail. The following Examples are described only for illustrations, and the present invention is not intended to be limited thereto.

### Example 1

A potassium carbonate powder and a titanium dioxide powder were weighed so as to satisfy the formula K₂Ti₄O₉, and mixed with and dissolved in pure water to prepare a slurry of mixed raw materials. This slurry was spray-dried with a spray dryer, and fired in a box-type electric furnace at 980°C for 1 hour. The fired product was stirred in a 3.6 N aqueous H₂SO₄ solution under a condition of a liquid temperature of 90°C for 15 hours to be subjected to proton exchange, and then subjected to decantation washing to remove unnecessary acid and salt. The proton exchange and the decantation washing were repeated twice. Solid-liquid separation was carried out by using Nutsche, and the solid was dried at 110°C for 24 hours. The dried product was heat-treated in a box-type electric furnace at 400°C to produce a titanium oxide. The titanium oxide was dispersed in pure water so as to have a solid content concentration of 300 g/L, to form a slurry, the pH of the slurry was adjusted to 6 by a 5 mol/L aqueous NaOH solution, and the resulting solution was stirred and held for 2 hours. This solution was filtered by Nutsche, and the product was washed with pure water and then dried in an oven at 110°C to obtain Sample 1.

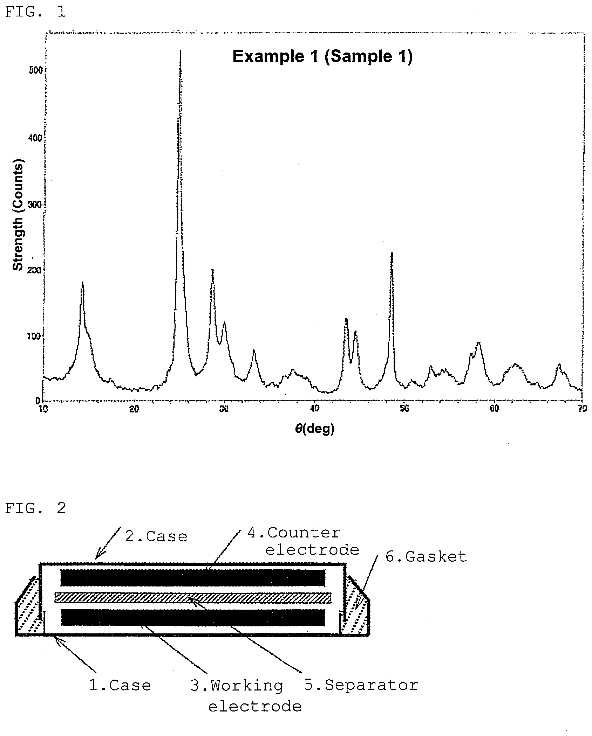

The X-ray diffraction measurement of Sample 1 was carried out using an X-ray diffraction apparatus (manufactured by Rigaku Corporation, trade name: RINT-TTRIII). A diffraction pattern shown in FIG. 1 was obtained, and a titanate compound of bronze type being monoclinic and having a space group C2/m was confirmed. The pigment pH was measured according to the pigment test method of JIS K5101-17-1 : 2004 and it was 4.1. The specific surface area was measured by a BET one point method with Gemini 2375 manufactured by Micromeritics and it was 47 m²/g.

Eighty two parts by weight of the present Sample, 9 parts by weight of acetylene black and 9 parts by weight of polyvinylidene fluoride were mixed, and then kneaded with N-methyl-2-pyrrolidone by a high shear mixer in a solid content concentration of 30% for 5 minutes to produce a coating material. Then, the coating material was applied on an Al foil by using a doctor blade, dried at 110°C, and then roll pressed to produce an electrode coating film having a thickness of 30 µm. The peel strength of the resulting coating film was measured using a rheometer RTC manufactured by Rheotech and it was 26 g/cm².

The produced electrode material mixture was punched into a round form of 1 cm², and then formed into a working electrode of a coin battery shown in FIG. 2. In FIG. 2, a metal lithium plate was used as a counter electrode, a solution obtained by dissolving LiPF₆ in an equal volume mixture of ethylene carbonate and dimethyl carbonate in a concentration of 1 mol/L was used as an electrolytic solution, and a glass filter was used as a separator. The coin battery produced as described above was used and discharged to 1.0 V at a constant current amount of 67 mA per g of active material, and then discharged until a current value was slightly changed to reach 0.01 mA or less so as to be kept at 1.0 V. The coin battery was charged to 3.0 V at a constant current amount of 67 mA per g of active material. Herein, the process of inserting Li was defined as discharge, and the process of desorbing Li was defined as charge. The coin battery was evaluated in a constant-temperature bath regulated at 25°C. As a result, the discharge capacity in the third cycle was 215 mAh/g, and the capacity retention rate of the discharge capacity in the fiftieth cycle to that in the third cycle was 97%.

### Example 2

Sample 2 was produced in the same manner as in Example 1 except that the pH of the slurry in which the titanium oxide was dispersed was adjusted to 11 by a 5 mol/L aqueous NaOH solution. The main component of the resulting X-ray diffraction pattern was found to be a titanium oxide of bronze type being monoclinic and having a space group C2/m, the pigment pH was 8.5, and the specific surface area was 46 m²/g. In addition, the peel strength was 41 g/cm². With respect to a coin battery using this Sample as an electrode, the discharge capacity in the third cycle was 219 mAh/g, and the capacity retention rate of the discharge capacity in the fiftieth cycle to that in the third cycle was 95%.

### Example 3

Sample 3 was produced in the same manner as in Example 1 except that the liquid temperature in the proton exchange was adjusted to 50°C. The main component of the X-ray diffraction pattern of the resulting Sample was confirmed to be a titanium oxide of bronze type being monoclinic and having a space group C2/m. The pigment pH was 5.2, and the specific surface area was 19 m²/g. In addition, the peel strength was 32 g/cm². With respect to a coin battery using this Sample as an electrode, the discharge capacity in the third cycle was 209 mAh/g, and the capacity retention rate of the discharge capacity in the fiftieth cycle to that in the third cycle was 97%.

### Example 4

Sample 4 was produced in the same manner as in Example 1 except that a niobium oxide powder was mixed in addition to a potassium carbonate powder and a titanium dioxide powder in mixing the raw materials. The X-ray diffraction pattern of the resulting Sample exhibited a single phase of a bronze type titanium oxide of crystal structure being monoclinic and having a space group C2/m. Elementary analysis was carried out by an X-ray diffraction apparatus XRF-1700 manufactured by Shimadzu Corporation, and it was found that the content of Nb₂O₅ was 8.9 wt% and the chemical composition determined from the content was Ti_{0.94}Nb_{0.06}O_{2.03}. The pigment pH was 4.8 and the specific surface area was 20 m²/g. In addition, the peel strength was 25 g/cm². With respect to a coin battery using this Sample as an electrode, the discharge capacity in the third cycle was 240 mAh/g, and the capacity retention rate of the discharge capacity in the fiftieth cycle to that in the third cycle was 94%.

### Example 5

Sample 5 was produced in the same manner as in Example 4 except that the pH of the slurry in which the titanium composite oxide was dispersed was adjusted to 11 using a 5 mol/L aqueous NaOH solution. The main component of the X-ray diffraction pattern of the resulting Sample was confirmed to be a titanium oxide of bronze structure being monoclinic and having a space group C2/m. The pigment pH was 7.8 and the specific surface area was 19 m²/g. In addition, the peel strength was 22 g/cm². With respect to a coin battery using this Sample as an electrode, the discharge capacity in the third cycle was 240 mAh/g, and the capacity retention rate of the discharge capacity in the fiftieth cycle to that in the third cycle was 94%.

### Comparative Example 1

Sample 6 was produced by synthesizing a titanium oxide in the same manner as in Example 1, where the titanium oxide was not dispersed in an aqueous system and the pH thereof was not adjusted. The main component of the X-ray diffraction pattern of the resulting Sample was found to be a titanium oxide of bronze structure being monoclinic and having a space group C2/m. The pigment pH was 2.1 and the specific surface area was 45 m²/g. In addition, the peel strength was 5 g/cm². With respect to a coin battery using this Sample as an electrode, the discharge capacity in the third cycle was 216 mAh/g, and the capacity retention rate of the discharge capacity in the fiftieth cycle to that in the third cycle was 93%.

### Comparative Example 2

Sample 7 was produced by synthesizing a titanium oxide in the same manner as in Example 3, where the titanium oxide was not dispersed in an aqueous system and the pH thereof was not adjusted. The main component of the X-ray diffraction pattern of the resulting Sample was found to be a titanium oxide of bronze structure being monoclinic and having a space group C2/m. The pigment pH was 2.9 and the specific surface area was 18 m²/g. In addition, the peel strength was 14 g/cm². With respect to a coin battery using this Sample as an electrode, the discharge capacity in the third cycle was 213 mAh/g, and the capacity retention rate of the discharge capacity in the fiftieth cycle to that in the third cycle was 98%.

### Comparative Example 3

Sample 8 was produced by synthesizing a titanium composite oxide in the same manner as in Example 4, where the titanium composite oxide was not dispersed in an aqueous system and the pH thereof was not adjusted. The main component of the X-ray diffraction pattern of the resulting Sample was found to be a titanium oxide of bronze structure being monoclinic and having a space group C2/m. The pigment pH was 2.5 and the specific surface area was 19 m²/g. In addition, the peel strength was 3 g/cm². With respect to a coin battery using this Sample as an electrode, the discharge capacity in the third cycle was 240 mAh/g, and the capacity retention rate of the discharge capacity in the fiftieth cycle to that in the third cycle was 94%.

### Comparative Example 4

The same procedure was taken as in Example 1 until the stage of proton exchange, and the pH was adjusted to 6 using a 5 mol/L aqueous NaOH solution after decantation washing. Subsequently, the resultant was filtered by Nutsche, and the product was washed with pure water, then put in an oven and dried therein at 110°C for 15 hours, and heat-treated using a firing furnace at 400°C. It was revealed from the X-ray diffraction pattern that the resulting Sample had two phases: a titanium oxide of bronze structure being monoclinic and having a space group C2/m and an anatase-type titanium oxide. The pigment pH was 8.2 and the specific surface area was 32 m²/g. In addition, the peel strength was 32 g/cm². With respect to a coin battery using this Sample as an electrode, the discharge capacity in the third cycle was 171 mAh/g, the discharge capacity in the fiftieth cycle was 172 mAh/g, and the capacity retention rate was 100%.

The foregoing results of Examples and Comparative Examples are shown in Table 1.

**[Table 1]**

| Item | Pigment pH | Specific surface area (m²/g) | Values of fluorescent X-ray analysis | | | | Peel strength (g/cm²) | Discharge capacity in the third cycle (mAh/g) |
|---|---|---|---|---|---|---|---|---|
| | | | K₂O (wt%) | SO₃ (wt%) | Na₂O (wt%) | Nb₂O₅ (wt%) | | |
| Example 1 | 4.1 | 47 | 0.27 | 0.83 | 0.00 | 0.31 | 26 | 215 |
| Example 2 | 8.5 | 46 | 0.30 | 0.72 | 0.36 | 0.31 | 41 | 219 |
| Example 3 | 5.2 | 19 | 0.77 | 0.17 | 0.00 | 0.31 | 32 | 209 |
| Example 4 | 4.8 | 20 | 0.32 | 0.61 | 0.00 | 8.9 | 25 | 240 |
| Example 5 | 7.8 | 19 | 0.34 | 0.61 | 0.22 | 8.9 | 22 | 240 |
| Comparative Example 1 | 2.1 | 45 | 0.33 | 1.85 | 0.00 | 0.31 | 5 | 216 |
| Comparative Example 2 | 2.9 | 18 | 0.81 | 0.35 | 0.00 | 0.31 | 14 | 213 |
| Comparative Example 3 | 2.5 | 19 | 0.35 | 0.89 | 0.00 | 8.9 | 3 | 240 |
| Comparative Example 4 | 8.2 | 32 | 0.27 | 0.30 | 2.7 | 0.00 | 35 | 171 |

As can be seen from Table 1, the peel strength of the titanium oxide having a pigment pH of 4 or more and having a bronze structure is higher than that of the titanium oxide having a pigment pH of 4 or less. In addition, in the case of carrying out the neutralization treatment using an aqueous NaOH solution after proton exchange (Comparative Example 4), the pigment pH is 4 or more and the peel strength is high, but the discharge capacity in the third cycle is 200 mAh/g or less.

## Claims

1. A titanium oxide having a pigment pH of more than 4 as measured according to the pigment test method of JIS K5101-17-1 : 2004 and having a bronze structure that is monoclinic and has a space group C2/m, wherein said titanium oxide is prepared by a method comprising the steps of:
preparing a slurry containing the titanium oxide of bronze structure, and
subjecting the slurry to a neutralization treatment using an aqueous alkaline solution so that the pH of the slurry is more than 4.

2. The titanium oxide according to claim 1, further comprising at least one metal element and/or non-metal element, wherein the metal element and/or non-metal element forms a composite with Ti and O.

3. The titanium oxide according to claim 2, comprising Nb as a metal element and/or P as a non-metal element.

4. Use of the titanium oxide as defined in any of claims 1 to 3 as a working electrode active material of a Li secondary battery, wherein said battery has a discharge capacity in the third cycle of 200 mAh/g or more.

5. A method for manufacturing a titanium oxide as defined in any of claims 1 to 3, comprising:
preparing a slurry containing a titanium oxide of bronze structure, and
subjecting the slurry to a neutralization treatment using an aqueous alkaline solution so that the pH is more than 4.

6. A secondary battery in which the titanium oxide as defined in any of claims 1 to 3 is used as a working electrode active material and Li metal is used as a counter electrode, wherein said battery has a discharge capacity in the third cycle of 200 mAh/g or more.

## Patentansprüche

1. Titanoxid mit einem gemäß dem Pigment-Prüfverfahren nach JIS K5101-17-1 : 2004 gemessenen Pigment-pH-Wert von mehr als 4 und mit einer Bronze-Struktur, die monoklin ist und eine Raumgruppe C2/m aufweist, wobei das Titanoxid mittels eines Verfahrens hergestellt wird, das die folgenden Schritte umfasst:
Herstellen einer Aufschlämmung, die das Titanoxid mit der Bronzestruktur enthält, und
Unterziehen der Aufschlämmung einer Neutralisationsbehandlung unter Verwendung einer wässrigen Alkalilösung, so dass der pH-Wert der Aufschlämmung mehr als 4 beträgt.

2. Titanoxid nach Anspruch 1, ferner umfassend wenigstens ein metallisches Element und/oder nichtmetallisches Element, wobei das metallische Element und/oder nichtmetallische Element eine Verbindung mit Ti und O bildet.

3. Titanoxid nach Anspruch 2, umfassend Nb als metallisches Element und/oder P als nichtmetallisches Element.

4. Verwendung des in einem der Ansprüche 1 bis 3 definierten Titanoxids als Arbeitselektroden-Aktivmaterial einer Lithium-Sekundärbatterie, wobei die Batterie im dritten Zyklus eine Entladekapazität von 200 mAh/g oder mehr aufweist.

5. Verfahren zur Herstellung eines in einem der Ansprüche 1 bis 3 definierten Titanoxids, umfassend:
Herstellen einer Aufschlämmung, die das Titanoxid mit der Bronzestruktur enthält, und
Unterziehen der Aufschlämmung einer Neutralisationsbehandlung unter Verwendung einer wässrigen Alkalilösung, so dass der pH-Wert mehr als 4 beträgt.

6. Sekundärbatterie, in der das in einem der Ansprüche 1 bis 3 definierte Titanoxid als Arbeitselektroden-Aktivmaterial verwendet wird, und das Metall Li als Gegenelektrode verwendet wird, wobei die Batterie im dritten Zyklus eine Entladekapazität von 200 mAh/g oder mehr aufweist.

## Revendications

1. Oxyde de titane ayant un pH de pigment de plus de 4 tel que mesuré selon la méthode d'essai des pigments de JIS K5101-17-1 : 2004 et ayant une structure de type bronze monoclinique et un groupe d'espace C2/m, ledit oxide de titane étant préparé par un procédé comprenant les étapes de :
préparer une suspension contenant l'oxyde de titane de structure de type bronze, et
soumettre la suspension à un traitement de neutralisation à l'aide d'une solution alcaline aqueuse de sorte que le pH de la suspension soit de plus de 4.

2. Oxyde de titane selon la revendication 1, qui comprend en outre au moins un élément métallique et/ou un élément non métallique, où l'élément métallique et/ou l'élément non métallique forme un composite avec Ti et O.

3. Oxyde de titane selon la revendication 2, qui comprend Nb comme élément métallique et/ou P comme élément non métallique.

4. Utilisation de l'oxyde de titane tel que défini dans l'une des revendications 1 à 3 comme matériau actif d'une électrode de travail d'une batterie secondaire au Li, où ladite batterie a une capacité de décharge au troisième cycle de 200 mAh/g ou plus.

5. Procédé de fabrication d'un oxyde de titane tel que défini dans l'une des revendications 1 à 3, qui comprend :
préparer une suspension contenant un oxyde de titane de structure de type bronze, et
soumettre la suspension à un traitement de neutralisation à l'aide d'une solution alcaline aqueuse de sorte que le pH de la suspension soit de plus de 4.

6. Batterie secondaire dans laquelle l'oxyde de titane tel que défini dans l'une des revendications 1 à 3 est utilisé comme matériau actif d'une électrode de travail et du Li métal est utilisé comme contre-électrode, où ladite batterie a une capacité de décharge au troisième cycle de 200 mAh/g ou plus.
